# EUROPEAN PATENT APPLICATION

(11) **EP 4 145 913 A1**
(43) Date of publication of application: **08.03.2023**
(21) Application number: 21796193.7
(22) Date of filing: 01.04.2021
(51) Int. Cl.: H04W 52/02

(54) **BEAM DETERMINATION METHOD AND DEVICE DURING DATA TRANSMISSION, STORAGE MEDIUM, UE, AND BASE STATION**

(30) Priority: 27.04.2020 CN 202010345568
(71) Applicant: Beijing Unisoc Communications Technology Co., Ltd., Beijing 100083 (CN)
(72) Inventor: GAO, Xinghang, Shanghai 201203 (CN)
(74) Representative: Stöckeler, Ferdinand
(86) International application number: PCT/CN2021/084915
(87) International publication number: WO 2021/218565

(57) **Abstract**

A beam determination method and device during data transmission, a storage medium, a UE, and a base station. The method comprises: determining a target SSB for responding to data transmission; and sending uplink data to a base station, and indicating the target SSB when sending the uplink data, so that the base station uses the target SSB to send response information in response to the uplink data, wherein the SSB has one-to-one correspondence to a beam. The method can avoid unnecessary resource waste of the base station and save the power consumption of the base station.

## Description

### CROSS-REFERENCE TO RELATED APPLICATIONS

This application claims priority to Chinese Patent Application No. 202010345568.2, filed on April 27, 2020, and entitled "BEAM DETERMINATION METHOD AND DEVICE FOR DATA TRANSMISSION, STORAGE MEDIUM, UE, AND BASE STATION", the entire disclosure of which is incorporated herein by reference.

### TECHNICAL FIELD

The present disclosure generally relates to communication field, and more particularly, to a beam determination method and device for data transmission, a storage medium, a User Equipment (UE), and a base station.

### BACKGROUND

In Long Term Evolution (LTE) of the fourth-generation communication protocol (4G), data transmission can be performed on a Preconfigured Uplink Resource (PUR). A service cell where a UE is located can be regarded as a single beam operation, and a base station may transmit a response message directly to the UE on the beam.

In the fifth-generation communication protocol (5G) New Radio (NR), a multi-beam operation is supported, and each beam corresponds to a Synchronization Signal and PBCH block (SSB) and can be connected to the UE. In Release (Rel)-15/Rel-16 (R15/R16), when no data is transmitted or received by the UE, the base station instructs that the UE is in an inactive state, and the UE in the inactive state can be transferred to a connected state through a Random Access (RA) procedure. Rel-17 (R17) supports the UE in the active state to transmit uplink data on a PUR. However, if the base station configures a multi-SSB operation, after the UE transmits the uplink data, the base station needs to know on which SSB a response message should be transmitted to the UE. If the base station transmits the response message to the UE with all available SSBs, it can ensure that the UE receives the response message, but results in unnecessary waste of resources and increases power consumption of the base station.

### SUMMARY

Embodiments of the present disclosure may avoid a waste of resources and power consumption caused by a base station transmitting response messages on all SSBs.

In an embodiment of the present disclosure, a beam determination method for data transmission is provided, including: determining a target SSB used for response to data transmission; and transmitting uplink data to a base station, and indicating the target SSB at transmission of the uplink data, so that the base station uses the target SSB to transmit response information in response to the uplink data, wherein the target SSB and a beam are in one-to-one correspondence.

Optionally, said indicating the target SSB at transmission of the uplink data includes: indirectly indicating the target SSB based on a DeModulation Reference Signal (DMRS) resource associated with the uplink data and a preset mapping relationship at the transmission of the uplink data, wherein the preset mapping relationship includes one-to-one correspondence between the DMRS resource and the target SSB.

Optionally, said indirectly indicating the target SSB based on a DMRS resource associated with the uplink data and a preset mapping relationship at the transmission of the uplink data includes: determining the DMRS resource corresponding to the target SSB based on the target SSB and the preset mapping relationship; and correlating the uplink data with the DMRS resource corresponding to the target SSB at the transmission of the uplink data.

Optionally, the DMRS resource is a DMRS sequence and/or a DMRS port.

Optionally, the method further includes: receiving system information or dedicated Radio Resource Control (RRC) signaling to obtain DMRS resource configuration and the preset mapping relationship.

Optionally, said indicating the target SSB at transmission of the uplink data, includes: directly indicating the target SSB using a report signaling at the transmission of the uplink data.

Optionally, the report signaling is carried in Medium Access Control-Control Element (MAC-CE) or Uplink Control Information (UCI).

In an embodiment of the present disclosure, a beam determination method for data transmission is provided, including: receiving uplink data from a UE, and determining a target SSB used for response to data transmission based on the uplink data; and using the target SSB to transmit response information in response to the uplink data, wherein the target SSB and a beam are in one-to-one correspondence.

Optionally, said determining a target SSB used for response to data transmission based on the uplink data includes: determining a DMRS resource associated with the uplink data, and determining the target SSB corresponding to the DMRS resource associated with the uplink data based on a preset mapping relationship, wherein the preset mapping relationship includes one-to-one correspondence between the DMRS resource and the target SSB.

Optionally, the DMRS resource is a DMRS sequence and/or a DMRS port.

Optionally, the method further includes: indicating DMRS resource configuration and the preset mapping relationship via system information or dedicated RRC signaling transmitted to the UE.

Optionally, the uplink data includes a report signaling which directly indicates the target SSB, and said determining the target SSB used for response to data transmission based on the uplink data includes: determining the target SSB based on the report signaling.

Optionally, the report signaling is carried in MAC-CE or UCI.

In an embodiment of the present disclosure, a beam determination device for data transmission is provided, including: a target SSB determining circuitry configured to determine a target SSB used for response to data transmission; and an uplink data transmitting circuitry configured to transmit uplink data to a base station, and indicate the target SSB at transmission of the uplink data, so that the base station uses the target SSB to transmit response information in response to the uplink data, wherein the target SSB and a beam are in one-to-one correspondence.

In an embodiment of the present disclosure, a beam determination device for data transmission is provided, including: an uplink data receiving circuitry configured to receive uplink data from a UE, and determine a target SSB used for response to data transmission based on the uplink data; and a responding circuitry configured to use the target SSB to transmit response information in response to the uplink data, wherein the target SSB and a beam are in one-to-one correspondence.

In an embodiment of the present disclosure, a storage medium having computer instructions stored therein is provided, wherein when the computer instructions are executed by a processor, any one of the above methods is performed.

In an embodiment of the present disclosure, a UE including the device, or including a memory and a processor is provided, wherein the memory has computer instructions stored therein, and when the processor executes the computer instructions, any one of the above methods is performed.

In an embodiment of the present disclosure, a base station including the device, or including a memory and a processor is provided, wherein the memory has computer instructions stored therein, and when the processor executes the computer instructions, any one of the above methods is performed.

Embodiments of the present disclosure may provide following advantages.

Embodiments of the present disclosure provide a beam determination method for data transmission, including: determining a target SSB used for response to data transmission; and transmitting uplink data to a base station, and indicating the target SSB at transmission of the uplink data, so that the base station uses the target SSB to transmit response information in response to the uplink data, wherein the target SSB and a beam are in one-to-one correspondence. In the embodiments, the UE indicates the target SSB when transmitting uplink data to the network side, so that the base station can directly transmit a response message corresponding to the uplink data to the UE through the target SSB without transmitting response messages to multiple SSBs configured for the base station, thereby avoiding unnecessary waste of resources and saving power consumption of the base station.

Further, the preset mapping relationship between the DMRS resource and the SSB may be the mapping relationship between the DMRS sequence and the SSB, or the mapping relationship between the DMRS port and the SSB, or the mapping relationship between the combination of the DMRS sequence and the DMRS port and the SSB, so that the UE indicates the target SSB when transmitting uplink data through the DMRS resource.

Further, the UE may directly indicate the target SSB via report signaling in the uplink data transmitted to the base station, so that the base station determines the target SSB based on decoded uplink data, and transmits to the UE a downlink response message with the target SSB. The report signaling may be carried by MAC-CE or UCI.

### BRIEF DESCRIPTION OF THE DRAWINGS

FIG. 1 is a diagram of a first situation after a UE transmits a resumption request to a network in existing techniques;
FIG. 2 is a diagram of a second situation after a UE transmits a resumption request to a network in existing techniques;
FIG. 3 is a diagram of a third situation after a UE transmits a resumption request to a network in existing techniques;
FIG. 4 is a diagram of a fourth situation after a UE transmits a resumption request to a network in existing techniques;
FIG. 5 is a flow chart of a beam determination method for data transmission according to an embodiment;
FIG. 6 is a diagram of a preset mapping relationship between a DMRS sequence or port and an SSB according to an embodiment;
FIG. 7 is a diagram of a preset mapping relationship between a combination of a DMRS sequence and a DMRS port and an SSB according to an embodiment;
FIG. 8 is a diagram of an MAC CE of 8 bits indicating a target SSB according to an embodiment;
FIG. 9 is a diagram of an MAC CE of 16 bits indicating a target SSB according to an embodiment;
FIG. 10 is a diagram of an MAC CE indicating a target SSB using groups according to an embodiment;
FIG. 11 is a diagram of an MAC CE indicating a target SSB using a binary value according to an embodiment;
FIG. 12 is a structural diagram of a UCI according to an embodiment;
FIG. 13 is a flow chart of a beam determination method for data transmission according to an embodiment;
FIG. 14 is a structural diagram of a beam determination device for data transmission according to an embodiment; and
FIG. 15 is a structural diagram of a beam determination device for data transmission according to an embodiment.

### DETAILED DESCRIPTION

According to the background, LTE supports a UE in an idle state to transmit data on preconfigured uplink resources. A base station can configure for the UE in a connected state, through an RRC connection release message, preconfigured uplink resources for data transmission after the UE enters the idle state, and update the preconfigured uplink resources. After transmitting data on the preconfigured uplink resources, the UE needs to listen to a corresponding response window to receive a response message from the base station.

In the R15, NR introduces an inactive state. When the UE has no data to transmit and receive, the base station instructs that the UE enters an inactive state. The UE behaves the same in the inactive state and the idle state, where the UE does not listen to PDCCH, does not measure, but only performs reference signal detection, cell reselection, paging information or System Information (SI) monitoring and so on. A difference between the UE in the active state and in the idle state is as following. In the inactive state, the base station and the UE both save context of transmitted and received data of the UE. When there is data to be retransmitted, the UE can be quickly resumed through a Random Access Channel (RACH) procedure without operations in a security mode operation, such as reactivation, capability reporting or information configuration. As a result, a signaling interaction process when the UE is converted to the active state is simplified, signaling overhead is reduced, and power consumption of the UE is reduced as well.

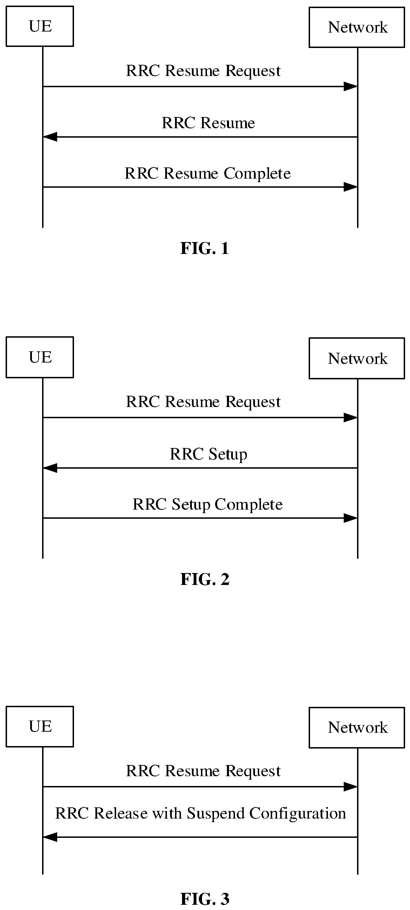

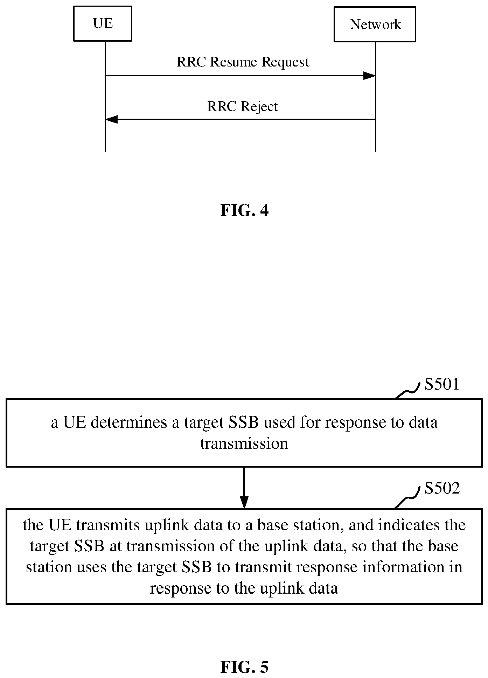

In the R16, the UE in the inactive state is not supported for user-level data transmission. If the UE has data to be transmitted, it needs to convert to the connection state for transmission. RRC resume can be completed quickly through 4-step RACH and 2-step RACH procedures. In this case, the UE transmits to the base station a resume message which may be RRC Resume Request as shown in FIGS. 1 to 4, and the base station may transmit a corresponding response message as follows in response to receiving the RRC Resume Request. Referring to FIGS. 1 to 4, FIGS. 1 to 4 are diagrams of four situations after a UE transmits an RRC connection resume message to a network or a base station in existing techniques. If the base station feeds back an RRC resume message as shown in FIG. 1 indicating that the resume is successful, the UE enters the connected state. Alternatively, the base station may reply an RRC Setup message as shown in FIG. 2 indicating a successful setup of RRC connection, that is, the RRC connection resumes and falls back to the RRC connection state, then the UE enters the connected state. Alternatively, the base station may reply an RRC Release message with Suspend Configuration as shown in FIG. 3, and then the UE still resides in the inactive state. Alternatively, the network rejects the RRC resume request and feeds back an RRC Reject message as shown in FIG. 4, and then the UE remains in the inactive state.

In NR, multi-beam operation is supported, and each beam corresponds to an SSB that can be connected to the UE. The base station indicates an association relationship between a random access resource and the SSB through system information. The UE first performs measurement on a downlink reference signal, selects an appropriate SSB for residency, and transmits a preamble on a Physical Random Access Channel (PRACH) resource associated with the selected SSB. By detecting the preamble transmitted on the corresponding PRACH time-frequency domain resource, the base station can determine the appropriate SSB for the UE based on the association relationship between the random access resource and the SSB, and use the SSB to transmit a random access response.

At present, 3GPP is established through an R17 small packet transmission. The UE can transmit small packets in the inactive state. In the project establishment, data transmission is supported on preconfigured uplink resources. As configured grant supported by NR is mainly used for a scenario of Ultra Reliable Low Latency Communications (URLLC) and is only used in the connected state, the base station and the UE know the SSB where the UE resides, and the base station knows which SSB is used to transmit the response message to the UE after the UE transmits the uplink data.

NR supports that Semi-Persistent Scheduling (SPS) is used for downlink data transmission, and the base station may configure SPS according to the UE's service, including parameters such as cycles, HARQ process and Modulation and Coding Schemes (MCS). The base station activates SPS through a Physical Downlink Control Channel (PDCCH) which schedules resources for subsequent transmission, updates the scheduled resources through the PDCCH, and deactivates SPS resources through the PDCCH.

NR supports Configured Grant for uplink data transmission. The base station pre-configures resources in advance or activates the preconfigured resources through PDCCH, including cycles, time-frequency domain resources, repetition information, and MCS. The UE transmits data on the corresponding resource based on the configuration.

However, in the existing techniques, the base station cannot determine which SSB is used to reply a response message to the UE in a non-connected state. If all available SSBs are used for transmitting to the UE response messages, an unnecessary waste of resources may be caused, and power consumption of the base station may be increased.

Embodiments of the present disclosure provide a beam determination method for data transmission, including: determining a target SSB used for response to data transmission; and transmitting uplink data to a base station, and indicating the target SSB at transmission of the uplink data, so that the base station uses the target SSB to transmit response information in response to the uplink data, wherein the target SSB and a beam are in one-to-one correspondence.

By the method, the base station can transmit a response message to the UE through the target SSB based on indication of the UE, thereby avoiding an unnecessary waste of resources and saving power consumption of the base station.

In order to clarify the objects, characteristics and advantages of the disclosure, embodiments of present disclosure will be described in detail in conjunction with accompanying drawings.

FIG. 5 is a flow chart of a beam determination method for data transmission according to an embodiment. The method includes S501 and S502.

In S501, a UE determines a target SSB used for response to data transmission.

In S502, the UE transmits uplink data to a base station, and indicates the target SSB at transmission of the uplink data, so that the base station uses the target SSB to transmit response information in response to the uplink data.

The target SSB and a beam are in one-to-one correspondence.

The beam determination method for data transmission as shown in FIG. 5 may be performed by a UE in NR communication. When transmitting uplink data to the base station, the UE transmits indication information of the target SSB in response by the base station to the data transmission of the UE together with the uplink data (e.g., the indication information may be integrated in the uplink data, or independent of the uplink data). The base station determines the target SSB for transmitting a response message to the UE according to the indication information from the UE, and transmits the response message to the UE through the target SSB.

Optionally, UE may determine an appropriate SSB as the target SSB by measuring a downlink reference signal.

Optionally, the uplink data is data transmitted by the UE to the network side or the base station on a PUR.

Optionally, the UE in the inactive state indicates the target SSB at the transmission of the uplink data, where the UE may select a resident SSB as the target SSB according to signal strength corresponding to each beam.

In the embodiments, the UE indicates the target SSB when transmitting uplink data to the network side, so that the base station can directly transmit a response message corresponding to the uplink data to the UE through the target SSB without transmitting response messages to multiple SSBs configured for the base station, thereby avoiding unnecessary waste of resources and saving power consumption of the base station.

Still referring to FIG. 5, in some embodiments, S502 includes: indirectly indicating the target SSB based on a DMRS resource associated with the uplink data and a preset mapping relationship at the transmission of the uplink data, wherein the preset mapping relationship includes one-to-one correspondence between the DMRS resource and the target SSB.

In some embodiments, the preset mapping relationship includes mapping relations between multiple SSBs and DMRS resources configured by the base station, and is the same at the base station and the UE. The UE may associate the DMRS resource corresponding to the target SSB to indicate the target SSB at the transmission of the uplink data based on the preset mapping relationship. When decoding the uplink data received from the UE, the base station decodes the target SSB indicated by the UE based on the DMRS resource associated with the uplink data and the preset mapping relationship.

In some embodiments, said indirectly indicating the target SSB based on the DMRS resource associated with the uplink data and the preset mapping relationship at the transmission of the uplink data includes: determining the DMRS resource corresponding to the target SSB based on the target SSB and the preset mapping relationship; and correlating the uplink data with the DMRS resource corresponding to the target SSB at the transmission of the uplink data.

In some embodiments, the UE indicating the target SSB at the transmission of the uplink data includes: after determining the target SSB, associating the uplink data with the corresponding DRMS resource on the uplink resource preconfigured by the base station to the UE. The base station determines the target SSB indicated by the UE after decoding the DRMS resources of the uplink data, and uses the target SSB to transmit a response message to the UE.

In some embodiments, the DMRS resource is a DMRS sequence and/or a DMRS port.

The DMRS resources may be a DMRS sequence resource or a DMRS port resource, or a DMRS sequence and DMRS port combined resource. According to the number of SSBs transmitted by a cell, the DMRS sequence may be set to correspond to the SSB one by one, or the DMRS port may be set to correspond to the SSB one by one, or the combination of the DMRS sequence and the DMRS port may be set to correspond to the SSB one by one.

In some embodiments, if the number of SSBs transmitted by the base station is relatively small, the DMRS sequences or the DMRS ports may be set to correspond to different SSBs.

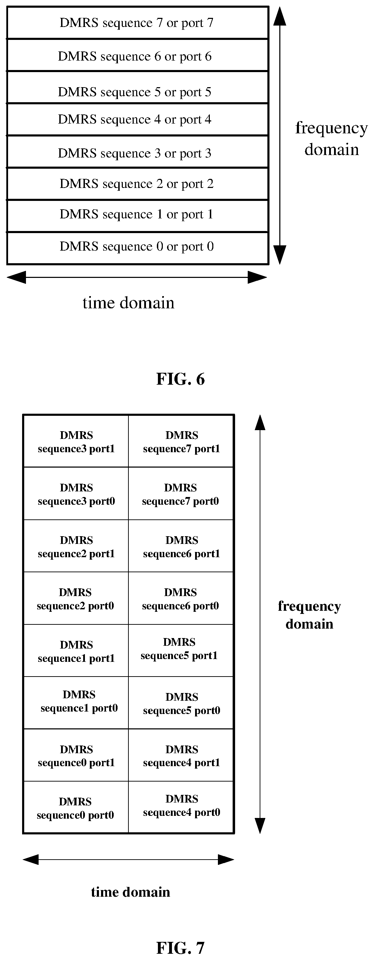

Referring to FIG. 6, FIG. 6 is a diagram of a preset mapping relationship between a DMRS sequence or port and an SSB according to an embodiment. For example, DMRS sequences correspond to different SSBs. If the base station transmits 4 SSBs (called SSB0, SSB1, SSB2, and SSB3), the preset mapping relationship may indicate that 4 different DMRS sequences (DMRS sequence 0, DMRS sequence 1, DMRS sequence 2, and DMRS sequence 3) need to correspond to different SSBs. For example, DMRS sequence 0 corresponds to SSB0, DMRS sequence 1 corresponds to SSB1, DMRS sequence 2 corresponds to SSB2, and DMRS sequence 3 corresponds to SSB3.

In FIG. 6, when different DMRS sequences correspond to different SSBs, for example, the preset mapping relationship indicates that four DMRS port numbers (DMRS port0, DMRS port 1, DMRS port 2, and DMRS port 3) correspond to different SSBs, that is, DMRS port 0 corresponds to SSB0, DMRS port 1 corresponds to SSB1, DMRS port 2 corresponds to SSB2, and DMRS port 3 corresponds to SSB3.

In the above two preset mapping examples, when the UE determines that SSB2 is the target SSB, the UE transmits uplink data using DMRS sequence 2 or DMRS port 2 on a preconfigured time-frequency domain resource.

Optionally, if the number of SSBs is relatively great, the combination of DMRS sequence and DMRS port may correspond to different SSBs, which may be sorted in an order of DMRS sequence and then DMRS port, or in an order of DMRS port and then DMRS sequence.

Referring to FIG. 7, FIG. 7 is a diagram of a preset mapping relationship between a combination of a DMRS sequence and a DMRS port and an SSB according to an embodiment. If the base station transmits 16 SSBs (SSB0, SSB1, ..., SSB15), and configures 8 DMRS sequences (DMRS sequence 0, DMRS sequence 1, ..., DMRS sequence 7) and 2 DMRS ports (DMRS port 0 and DMRS port 1), the preset mapping relationship can indicate that DMRS sequence 0 and DMRS port 0 correspond to SSB0, DMRS sequence 0 and DMRS port 1 correspond to SSB1, DMRS sequence 1 and DMRS port 0 correspond to SSB2, DMRS sequence 1 and DMRS port 1 correspond to SSB3, and so on. In this case, if the target SSB determined by the UE is SSB2, it corresponds to DMRS sequence 1 and DMRS port 0, and the UE should use DMRS sequence 1 to associate the uplink data on a time-frequency resource configured to UE and use DMRS port 0 for transmission.

Alternatively, the preset relationship may indicate that DMRS sequence 0 and DMRS port 0 correspond to SSB0, DMRS sequence 1 and DMRS port 0 correspond to SSB1, DMRS sequence 2 and DMRS port 0 correspond to SSB2, and so on. In this case, if the target SSB determined by the UE is SSB2, it corresponds to DMRS port 0 and DMRS sequence 2, and the UE should use DMRS sequence 2 to associate the uplink data on a time-frequency resource configured to UE and use DMRS port 0 for transmission.

In the embodiments, the preset mapping relationship between DMRS resources and SSB may be the mapping relationship between DMRS sequence and SSB, or the mapping relationship between DMRS port and SSB, or the mapping relationship between the combination of DMRS sequence and DMRS port and SSB, so that the UE indicates the target SSB at the transmission of the uplink data through DMRS resources.

In some embodiments, the beam determination method for data transmission may further include: receiving system information or dedicated RRC signaling to obtain DMRS resource configuration and the preset mapping relationship.

Specifically, the network side (or base station) may indicate the DMRS resource configured by the base station and the preset mapping relationship between the DMRS resource and the SSB through system information or UE-specific RRC signaling. For example, the base station may indicate the preset mapping relationship between the DMRS resource and the SSB in the RRC signaling that indicates the UE to enter the inactive state and configures dedicated preconfigured uplink resources to the UE.

Alternatively, the base station may configure DMRS resources and indicate the preset mapping relationship between the DMRS resource and SSB while instructing a cell to enable a preconfigured uplink resource transmission function in Remaining Minimum System Information (RMSI).

In some embodiments, still referring to FIG. 5, S502 includes: directly indicating the target SSB using a report signaling at the transmission of the uplink data.

In some embodiments, in S502, the UE may report the target SSB when transmitting the uplink data on a preconfigured uplink resource.

Optionally, the report signaling may include an index of the target SSB, so that the base station determines the target SSB based on the index. That is, the network side (or the base station) and the UE unify a set of SSB indexing mechanism to indicate the corresponding SSB through the SSB index.

Optionally, the report signaling is carried in MAC-CE or UCI.

A MAC CE may be newly defined to carry an index of the target SSB to indicate the target SSB determined by the UE. Length of the MAC CE may be determined based on the number of SSBs configured by the base station or the number of SSBs supported by the cell. The newly defined MAC CE and the uplink data to be transmitted by the UE are multiplexed to transmit on the preconfigured uplink resource, and a new Logical Channel IDentity (LCID) is reserved to identify the MAC CE.

Optionally, the newly defined MAC CE and the uplink data to be transmitted by the UE are multiplexed to transmit on the preconfigured uplink resource.

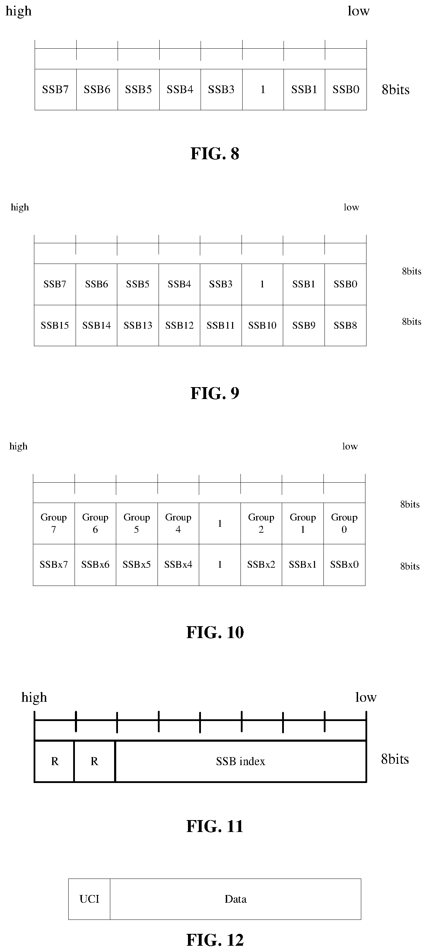

For example, for transmission of less than 8 or less than 16 SSBs, the target SSB determined by the UE may be indicated by MAC CE with a fixed length of 8 bits or 16 bits, where each bit represents an SSB, and the bits may correspond to sequential SSBs from low to high or from high to low. When a bit is set to 1, the SSB of the corresponding index is indicated to be the target SSB. Referring to FIG. 8, FIG. 8 is a diagram of an MAC CE of 8 bits indicating a target SSB according to an embodiment. The bits from low to high indicate the corresponding SSB. If SSB2 is the target SSB, a value of the bit corresponding to SSB2 is set to 1. Referring to FIG. 9, FIG. 9 is a diagram of an MAC CE of 16 bits indicating a target SSB according to an embodiment. If SSB2 is the target SSB, a value of the bit corresponding to SSB2 bit is set to 1, while other bits are set to 0.

Optionally, when the number of SSBs transmitted by the base station is greater than 8, groups may be formed, and the number of SSBs in each group is 8 SSBs. Two lines may be used to represent indexes of the SSBs transmitted by the base station, where the first line shows group identities, and the second line identifies positions of the SSB in the group (represented by SSB×N, where N is 0, 1, 2, ...7, respectively, which represents 8 SSBs in a group). Indexes of the SSBs in each group are arranged in an increasing order, and the UE determines the corresponding group and the position of the corresponding SSB in the group according to the index of the target SSB, and determines configuration of the bit of MAC CE. Referring to FIG. 10, FIG. 10 is a diagram of an MAC CE indicating a target SSB by using groups according to an embodiment. For example, the index of the target SSB determined by UE is SSB28, 28 mode 8 = 3 remaining 4, thus, the bit of the SSBx3 corresponding to group3 is set to 1, and remaining bits are set to 0.

Optionally, the index of the target SSB may be directly indicated by several bytes (bits), for example, 4 bits of binary values correspond to 16 SSBs, that is, "0000 to 1111", or 6 bits of binary values correspond to 64 SSBs, that is, "000000 to 111111". The number of bits required is not limited here, and any range of the number of bits is applicable. A specific MAC CE format may be referred to FIG. 11, FIG. 11 is a diagram of an MAC CE indicating a target SSB using a binary value according to an embodiment. The MAC CE shown in FIG. 11 includes 8 bits, where 6 bits indicate the index of the SSB, and remaining 2 bits are reserved bits (that is, R bits in FIG. 11). If the index of the target SSB determined by UE is SSB8, the index is set to 000111. The number of bits required for the index of the SSB depends on the number of SSBs transmitted by the base station, and the position of the MAC CE where the corresponding bit is located is not limited here. In addition, the UE indicates the appropriate SSB through UCI when transmitting the uplink data on the preconfigured uplink resource. The base station decodes the received uplink data on the preconfigured uplink resource, determines the target SSB through configuration of the UCI, and transmits a downlink response message to the UE with the target SSB.

Optionally, a UCI is embedded in a header sent by the preconfigured resource to carry the index of the target SSB to indicate the target SSB. A byte length of data in the UCI depends on the number of SSBs transmitted by the base station. Referring to FIG. 12, FIG. 12 is a structural diagram of a UCI according to an embodiment. For example, if the base station transmits 8 SSBs, the index of the SSB index may be identified by a binary value of 3bits. If SSB3 is the target SSB determined by UE, the corresponding 3bits should be set to "011". If the base station transmits 64 SSBs, the index of the SSB may be identified by a binary value of 6 bits. If SSB3 is an appropriate SSB for UE, the corresponding 6bits should be set to "000011".

In the embodiments, the UE may directly indicate the target SSB through the report signaling in the uplink data transmitted to the base station, so that the base station determines the target SSB based on the decoded uplink data, and uses the target SSB to transmit a downlink response message to the UE. The report signaling may be carried by MACCE or UCI.

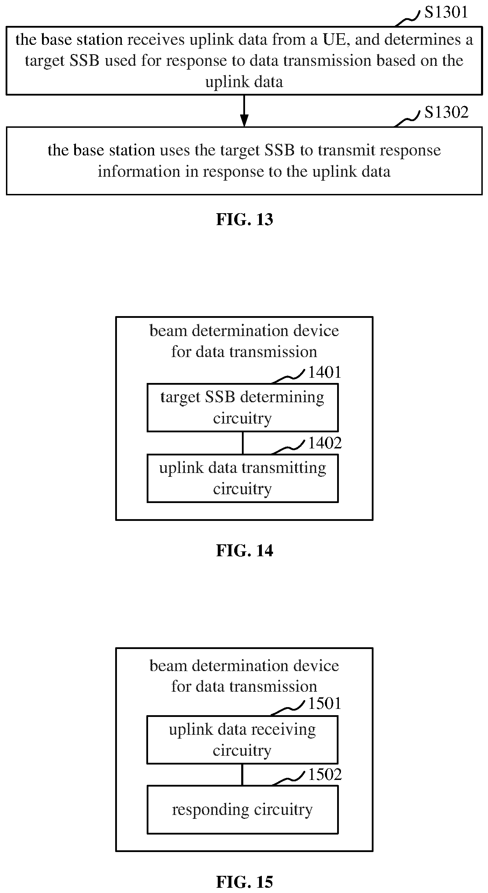

FIG. 13 is a flow chart of a beam determination method for data transmission according to an embodiment. The method is performed by a network side or a base station, and includes S 1301 and S 1302.

In S1301, the base station receives uplink data from a UE, and determines a target SSB used for response to data transmission based on the uplink data.

In S1302, the base station uses the target SSB to transmit response information in response to the uplink data.

The target SSB and a beam are in one-to-one correspondence.

Optionally, said determining a target SSB used for response to data transmission based on the uplink data includes: determining a DMRS resource associated with the uplink data, and determining the target SSB corresponding to the DMRS resource associated with the uplink data based on a preset mapping relationship, wherein the preset mapping relationship includes one-to-one correspondence between the DMRS resource and the target SSB.

Optionally, the DMRS resource is a DMRS sequence and/or a DMRS port.

Optionally, the method further includes: indicating DMRS resource configuration and the preset mapping relationship via system information or dedicated RRC signaling transmitted to the UE.

Optionally, the uplink data includes a report signaling which directly indicates the target SSB, and said determining the target SSB used for response to data transmission based on the uplink data includes: determining the target SSB based on the report signaling.

Optionally, the report signaling is carried in MAC-CE or UCI.

Details of working principles and working modes of the method as shown in FIG. 13 may be referred to relevant description of the network side or the base station in FIG. 5 to FIG. 12, and are not repeated here.

FIG. 14 is a structural diagram of a beam determination device for data transmission according to an embodiment.

The device includes: a target SSB determining circuitry 1401 configured to determine a target SSB used for response to data transmission; and an uplink data transmitting circuitry 1402 configured to transmit uplink data to a base station, and indicate the target SSB at transmission of the uplink data, so that the base station uses the target SSB to transmit response information in response to the uplink data.

The target SSB and a beam are in one-to-one correspondence.

Details of working principles and working modes of the device may be referred to relevant description of FIG. 5, and are not repeated here.

In some embodiments, the above-mentioned device may correspond to a chip with a beam determination function for data transmission in the UE, or to a chip with a data processing function, such as a System-On-Chip (SOC) or a baseband chip, or to a chip module including a chip with a beam determination function for data transmission in the UE, or to a chip module including a chip with a data processing function, or to the UE.

FIG. 15 is a structural diagram of a beam determination device for data transmission according to an embodiment.

The device includes: an uplink data receiving circuitry 1501 configured to receive uplink data from a UE, and determine a target SSB used for response to data transmission based on the uplink data; and a responding circuitry 1502 configured to use the target SSB to transmit response information in response to the uplink data.

The target SSB and a beam are in one-to-one correspondence.

Details of working principles and working modes of the device may be referred to relevant description of FIG. 13, and are not repeated here.

In some embodiments, the above-mentioned device may correspond to a chip with a beam determination function for data transmission in the base station, or to a chip with a data processing function, such as a System-On-Chip (SOC) or a baseband chip, or to a chip module including a chip with a beam determination function for data transmission in the base station, or to a chip module including a chip with a data processing function, or to the base station. Modules/units included in each apparatus and product described in the above embodiments may be software modules/units, hardware modules/units, or a combination of software modules/units and hardware modules/units.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

It should be noted that the technical solutions of the present disclosure can be applied to 5G communication systems, 4G and 3G communication systems, and various new communication systems in the future, such as 6G and 7G communication systems.

In an embodiment of the present disclosure, a storage medium having computer instructions stored therein is provided, wherein when the computer instructions are executed, the above method as shown in FIG. 5 or 13 is performed. The storage medium may be a computer-readable storage medium, for example, may include a non-volatile memory, a non-transitory memory, an optical disk, a mechanical hard disk, a solid-state disk, and the like.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

In an embodiment of the present disclosure, a UE including the device as shown in FIG. 14 or including a memory and a processor is provided, wherein the memory has computer instructions stored therein, and when the processor executes the computer instructions, the above method as shown in FIG. 5 is performed. The terminal may include but not limited to a mobile phone, a computer or a tablet computer.

A terminal in the embodiments of the present disclosure may refer to various forms of UE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

In an embodiment of the present disclosure, a base station including the device as shown in FIG. 15 or including a memory and a processor is provided, wherein the memory has computer instructions stored therein, and when the processor executes the computer instructions, the above method as shown in FIG. 13 is performed.

The Base Station (BS) in the embodiments of the present disclosure may also be referred to as a base station equipment, and is an apparatus deployed in a wireless access network to provide wireless communication functions. For example, an equipment that provides a base station function in a 2G network includes a Base Transceiver Station (BTS). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in 5G New Radio (NR) includes a gNB and an ng-eNB, where the gNB and the terminal use NR technology to communicate, and the ng-eNB and the terminal use Evolved Universal Terrestrial Radio Access (E-UTRA) technology to communicate. Both the gNB and the ng-eNB can be connected to a 5G core network. The base station also refers to an equipment that provides the base station function in a new communication system in the future.

The base station controller in the embodiments of the present disclosure is a device for managing base stations, such as a Base Station Controller (BSC) in a 2G network, a Radio Network Controller (RNC) in a 3G network, or a device that controls and manages a base station in a new communication system in the future.

The network in the embodiments of the present disclosure refers to a communication network that provides communication services for terminals, including a base station of a radio access network, a BSC of a radio access network, and a device on the core network.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A beam determination method for data transmission, **characterized by** comprising:
determining a target Synchronization Signal and Physical Broadcast Channel (PBCH) Block (SSB) used for response to data transmission; and
transmitting uplink data to a base station, and indicating the target SSB at transmission of the uplink data, so that the base station uses the target SSB to transmit response information in response to the uplink data,
wherein the target SSB and a beam are in one-to-one correspondence.

2. The method according to claim 1, **characterized in that** said indicating the target SSB at transmission of the uplink data comprises:
indirectly indicating the target SSB based on a DeModulation Reference Signal (DMRS) resource associated with the uplink data and a preset mapping relationship at the transmission of the uplink data, wherein the preset mapping relationship comprises one-to-one correspondence between the DMRS resource and the target SSB.

3. The method according to claim 2, **characterized in that** said indirectly indicating the target SSB based on a DMRS resource associated with the uplink data and a preset mapping relationship at the transmission of the uplink data comprises:
determining the DMRS resource corresponding to the target SSB based on the target SSB and the preset mapping relationship; and
correlating the uplink data with the DMRS resource corresponding to the target SSB at the transmission of the uplink data.

4. The method according to claim 2, **characterized in that** the DMRS resource is a DMRS sequence and/or a DMRS port.

5. The method according to any of claims 2 to 4, **characterized by** further comprising:
receiving system information or dedicated Radio Resource Control (RRC) signaling to obtain DMRS resource configuration and the preset mapping relationship.

6. The method according to claim 1, **characterized in that** said indicating the target SSB at transmission of the uplink data comprises:
directly indicating the target SSB using a report signaling at the transmission of the uplink data.

7. The method according to claim 6, **characterized in that** the report signaling is carried in Medium Access Control-Control Element (MAC-CE) or Uplink Control Information (UCI).

8. A beam determination method for data transmission, **characterized by** comprising:
receiving uplink data from a User Equipment (UE), and determining a target Synchronization Signal and Physical Broadcast Channel (PBCH) Block (SSB) used for response to data transmission based on the uplink data; and
using the target SSB to transmit response information in response to the uplink data,
wherein the target SSB and a beam are in one-to-one correspondence.

9. The method according to claim 8, **characterized in that** said determining a target SSB used for response to data transmission based on the uplink data comprises:
determining a DeModulation Reference Signal (DMRS) resource associated with the uplink data, and determining the target SSB corresponding to the DMRS resource associated with the uplink data based on a preset mapping relationship,
wherein the preset mapping relationship comprises one-to-one correspondence between the DMRS resource and the target SSB.

10. The method according to claim 9, **characterized in that** the DMRS resource is a DMRS sequence and/or a DMRS port.

11. The method according to claim 9 or 10, **characterized by** further comprising:
indicating DMRS resource configuration and the preset mapping relationship via system information or dedicated Radio Resource Control (RRC) signaling transmitted to the UE.

12. The method according to claim 8, **characterized in that** the uplink data comprises a report signaling which directly indicates the target SSB, and said determining the target SSB used for response to data transmission based on the uplink data comprises:
determining the target SSB based on the report signaling.

13. The method according to claim 12, **characterized in that** the report signaling is carried in Medium Access Control-Control Element (MAC-CE) or Uplink Control Information (UCI).

14. A beam determination device for data transmission, **characterized by** comprising:
a target Synchronization Signal and Physical Broadcast Channel (PBCH) Block (SSB) determining circuitry configured to determine a target SSB used for response to data transmission; and
an uplink data transmitting circuitry configured to transmit uplink data to a base station, and indicate the target SSB at transmission of the uplink data, so that the base station uses the target SSB to transmit response information in response to the uplink data,
wherein the target SSB and a beam are in one-to-one correspondence.

15. A beam determination device for data transmission, **characterized by** comprising:
an uplink data receiving circuitry configured to receive uplink data from a User Equipment (UE), and determine a target Synchronization Signal and Physical Broadcast Channel (PBCH) Block (SSB) used for response to data transmission based on the uplink data; and
a responding circuitry configured to use the target SSB to transmit response information in response to the uplink data,
wherein the target SSB and a beam are in one-to-one correspondence.

16. A storage medium having computer instructions stored therein, **characterized in that** when the computer instructions are executed by a processor, the method of any one of claims 1 to 7, or the method of any one of claims 8 to 13 is performed.

17. A User Equipment (UE), **characterized by** comprising the device of claim 14, or comprising a memory and a processor, **characterized in that** the memory has computer instructions stored therein, and when the processor executes the computer instructions, the method of any one of claims 1 to 7 is performed.

18. A base station, **characterized by** comprising the device of claim 15, or comprising a memory and a processor, **characterized in that** the memory has computer instructions stored therein, and when the processor executes the computer instructions, the method of any one of claims 8 to 13 is performed.
